# EUROPÄISCHE PATENTSCHRIFT

(11) **EP 1 525 972 B1**
(45) Veröffentlichungstag und Bekanntmachung des Hinweises auf die Patenterteilung: **02.08.2006**
(21) Anmeldenummer: 03024188.9
(22) Anmeldetag: 21.10.2003
(51) Int. Cl.: B29C 65/16, B23K 26/067

(54) **Verfahren und Vorrichtung zum Erwärmen von Kunststoffen mittels Laserstrahlen**
Method and apparatus for heating plastic materials with laser beams
Procédé et dispositif pour chauffer des matériaux plastiques avec des rayons laser

(43) Veröffentlichungstag der Anmeldung: 27.04.2005
(73) Patentinhaber: Leister Process Technologies, 6060 Sarnen (CH)
(72) Erfinder: Chen, Jie Wei, 6055 Alpnach Dorf (CH)
(74) Vertreter: Klocke, Peter

(56) Entgegenhaltungen:
- DE-A- 10 254 917
- US-B1- 6 207 925
- PATENT ABSTRACTS OF JAPAN Bd. 1996, Nr. 04, 30. April 1996 (1996-04-30) & JP 7 329669 A (TOYO TIRE & RUBBER CO LTD), 19. Dezember 1995 (1995-12-19)

## Beschreibung

Die vorliegende Erfindung betrifft ein Verfahren zum Erwärmen von Kunststoff mittels Laserpunkten aus einem Laserstrahl auf einer Fokusebene, vorzugsweise zum Verschweißen von Kunststoffen nach dem Laserdurchstrahlverfahren. Die Erfindung betrifft außerdem eine Vorrichtung zum Erwärmen von Kunststoffen mittels Laserstrahlen mit einem Bearbeitungskopf zur Aufnahme von Einrichtungen zur Formung des Laserstrahls.

Zum Verschweißen von Kunststoffen mittels Laserstrahlen ist es bekannt, in den sogenannten Durchstrahlschweißverfahren ein erstes Kunststoffteil, dass für den Laserstrahl transparent ist, mit einem zweiten Kunststoffteil, dass für den Laserstrahl absorbierend ist, an der Berührungsfläche zu erwärmen und unter Einwirkung von Druck miteinander zu verschweißen. Um die gewünschte Geschwindigkeit mit der der Laser über die Kunststoffbauteile bewegt wird, zu erreichen und trotzdem gute Schweißqualitäten zu gewährleisten, ist es erforderlich, in den Strahlengang einen Vorwärmprozess einzubauen, der dafür sorgt, dass die Erwärmung in an sich bekannter Weise in verschiedenen Schritten erfolgt. Hierzu ist es bekannt, mittels mehreren Laserstrahlen die punktuell hintereinander geführt werden, das Kunststoffmaterial in einem ersten Schritt auf eine Vorerwärmungstemperatur und in einem zweiten Schritt auf die Schweißtemperatur zu bringen.

Für das Schweißen von Planen aus beschichtetem Gewebe, Folien und Dichtungsbahnen wird eine Prüfstruktur nach dem Schweißen benötigt, um die Festigkeit der Schweißnähte zu prüfen. Wenn das Verschweißen mittels Laserstrahlen durchgeführt wird, ist es ebenfalls erforderlich, eine entsprechende Prüfstruktur während des Schweißprozesses zu erzeugen. Üblicherweise geschieht dies durch die Erzeugung von Doppelschweißlinien

In der DE 102 54 917 A1 wird ein Verfahren und eine Vorrichtung zum gleichzeitigen Blockschmelzen von Material, insbesondere Kunststoff, mittels eines YAG-Laser offenbart. Dabei wird ein Laserstrahl auf ein optisches Beugungselement, wie etwa eine Beugungslinse gelenkt und dadurch in eine große Anzahl von Strahlen durch Beugung und Transmission aufgespaltet. Die Strahlen werden anschließend durch eine Kondensorlinse auf einer Kunststoffoberfläche als einzelne Punkte oder Linien gebündelt bzw. fokussiert. Der Kunststoff wird an den Fokussierungspunkten für ein Zusammenschweißen mit einem anderen Objekt oder für eine Materialabtragung gleichzeitig zum Schmelzen erhitzt. Dabei tritt in dem Werkstoff keine Deformation auf. Das Bearbeitungsmaterial bzw. der Werkstoff kann zusätzlich zu einem Kunststoff auch beispielsweise ein Metall sein.

In der US 6 207 925 B1 ist ein Verfahren und eine Vorrichtung zum Verschweißen und gleichzeitigen Trennen von flexiblen Verpackungsfolien mittels Laser beschrieben. Dabei werden ein Laserstrahl oder mehrere Laserstrahlen, auch aufgeteilte Laserstrahlen, über eine Scannereinrichtung auf die mehrlagig übereinander angeordneten Kunststofffolien gelenkt, die unter einem nichtbewegten Bearbeitungskopf vorbeigeführt werden. In einem Ausführungsbeispiel wird ein Laserstrahl durch ein optisches Beugungselement in drei seperate Sub-Strahlen aufgeteilt, wobei deren Strahlstärke durch optische Einrichtungen regelbar ist.

Es ist bekannt, zum Spalten von Licht eine Strahlteilung vorzunehmen, so dass aus einer Lichtquelle mehrere Lichtausgänge in unterschiedliche Richtungen erzeugt werden, die die gleiche Strahlqualität besitzen. Die Lichtintensität bei verschiedenen Lichtausgängen wird durch optische Eigenschaften des Strahlteilers bestimmt. Der Platzbedarf und die Kosten sind aber relativ hoch, da jeder optische Ausgang sämtliche Linsenkomponenten benötigt, um den Strahl entsprechend zu formen und zu kollimieren. Vor allem dann, wenn es um eine leicht räumliche Spaltung des Lichtes geht ist diese Methode nicht anwendbar.

Der vorliegenden Erfindung liegt daher die Aufgabe zugrunde, eine Möglichkeit vorzuschlagen, bei der unter Berücksichtigung von guter Handhabung, Flexibilität und möglichst der Nutzung auch von Lichtfasern eine Mehrzahl von Laserpunkten auf einer Fokusebene erzeugt werden können.

Diese Aufgabe wird erfindungsgemäß durch ein Verfahren mit den Merkmalen des Anspruchs 1 sowie durch eine Vorrichtung mit den Merkmalen des Vorrichtungsanspruchs gelöst. Weitere vorteilhafte Ausgestaltungen sind den jeweiligen rückbezogenen Unteransprüchen zu entnehmen.

Mittels des erfindungsgemäßen Verfahrens und der Vorrichtung wird der Laserstrahl, der aus einer Punktstrahlquelle, die sowohl als Lichtfaser als auch als freistrahlende Strahlung zur Verfügung steht, zuerst durch eine Linsenkombination erweitert und kollimiert. Im kollimierten Strahlgang wird eine Aufteilung vorgenommen, die sich nach der Anzahl der zu erzeugenden Laserpunkte richtet. Hierzu wird eine in diesem Text als Mehrfachkeilplatte bezeichnete Platte verwendet, die entsprechend der Anzahl der zu erzeugenden Laserpunkte Ebenen aufweist, die gegenüber der zur optischen Achse senkrechten Fläche um einen geringen Winkel geneigt sind. Bei den Keilen handelt es sich grundsätzlich um Ablenkprismen mit einem kleinen Winkel. Im Falle von mehr als zwei Laserpunkten weist diese Mehrfachkeilplatte eine flache pyramidenähnliche Struktur mit einer Mehrzahl von spitz zulaufenden, um den vorgegebenen Winkel geneigten Ebenen auf. Die Mehrfachkeilplatte wird im Strahlengang zentriert, wobei jedoch auch durch eine Verschiebung zur optischen Achse unterschiedliche Lichtstärken auf verschiede Punkte realisiert werden können.

Die Erfindung bietet damit die Möglichkeit, minimale räumliche Spaltung des Laserstrahls innerhalb eines optischen Systems zu realisieren. Die Distanz der Spaltung auf die Fokusebene ist leicht justierbar. Diese Lösung kann in einen Bearbeitungskopf integriert werden und hat damit minimale Baugröße und verfügt über volle Bewegungsflexibilität. Da nur eine optische Komponente für die Lichtspaltung verantwortlich ist, besteht hier die optische Umschaltmöglichkeit zwischen Einzel-, Doppel- oder Mehrfachstrahlung. Die gespalteten Lichtstrahlen verlaufen quasi entlang der gleichen optischen Achse, so dass die geometrische Anordnung durch minimale Verstellung realisiert werden kann.

Gemäß einer bevorzugten Ausbildung werden die getrennten Laserstrahlen nach der Konvergenzlinse in eine für den Laserstrahl transparente Kugel, vorzugsweise aus Glas, eingekoppelt und bei der Bewegung der Kugel die Laserstrahlen entsprechend über die Fokusebene geführt.

Zur Erzeugung von parallelen Zick-Zack-Schweißlinien, wie sie insbesondere für das Schweißen von Folien benötigt werden, werden gemäß einer weiteren Ausbildung der Erfindung, über zwei quer zum Strahlengang bewegbare Ablenkelemente Laserpunkte erzeugt. Vorzugsweise sind die Ablenkelemente um einen vorgegebenen Winkel entgegengesetzt ablenkend ausgebildet und werden abwechseln in den Strahlengang gebracht. Durch die Unterbringung der Anordnung in einem Bearbeitungskopf, insbesondere in Kombination mit einer auf dem zu verschweißenden Kunststoffmaterial laufenden transparenten Kugel, kann ein leicht handhabbares Element realisiert werden, mit dem ein Erwärmen und Verschweißen entlang nahezu beliebiger Konturen möglich ist.

Nachfolgend wird die Erfindung anhand von Ausführungsbeispielen näher erläutert. Es stellen dar:
- Figur 1: die prinzipielle Darstellung einer optischen Anordnung zur Erzeugung von zwei Lichtpunkten auf einer Fokusebene;
- Figur 2: die Integration der Anordnung von Figur 1 in einem Bearbeitungskopf mit einer Glaskugel als Andrück- und Leitelement für den Laserstrahl;
- Figur 3: verschiedene beispielhafte Ausgestaltungen von Mehrkeilplatten;
- Figur 4: die schematische Darstellung der Verschweißung von zwei Kunststoffmaterialien mit verschiedenen Bewegungsrichtungen der Laserpunkte, wobei die Laserpunkte nebeneinander (Figur 4a) oder hintereinander (Figur 4b) in Bezug auf die Bewegungsrichtung angeordnet sind;
- Figur 5: die Darstellung von zwei hintereinander bewegten Laserpunkten beim Durchstrahlschweißverfahren und die Temperaturverteilung über die Wegstrecke;
- Figur 6: einen Teil der Anordnung mit einer Zweikeilplatte mit unterschiedlich großen geneigten Ebenen mit einer Darstellung der Intensität in der Fokusierebene; und
- Figur 7: eine Anordnung zur Erzeugung von parallelen Zick-Zack-Bahnen der Laserpunkte in der Fokusebene.

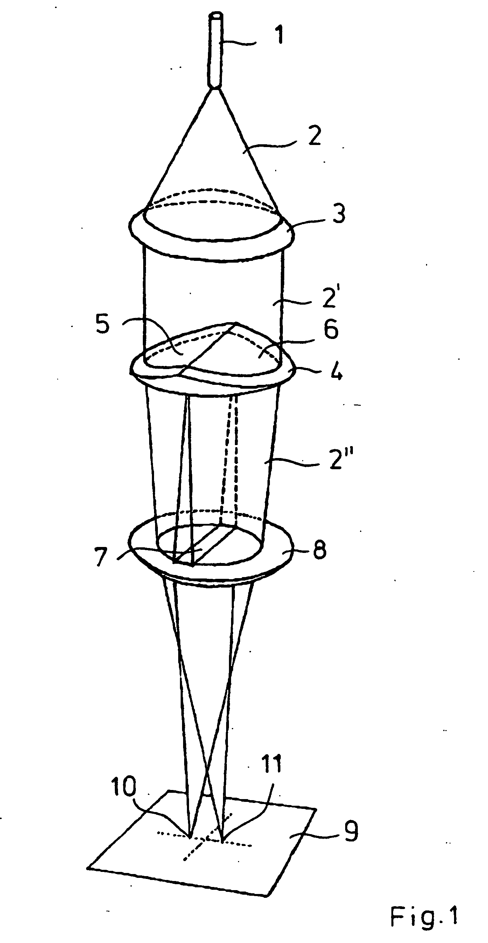

Figur 1 zeigt eine Lichtleitfaser 1, aus der ein Laserstrahl 2 austritt. Mittels einer Linse 3 wird der Laserstrahl kollimiert und trifft dann auf eine Doppelkeilplatte 4. Wie der Figur zu entnehmen ist, sind die Keile 5, 6 derart angeordnet, dass die dem kollimierten Laserstrahl 2' zugewandte Ebene von der Mitte nach außen abfällt und damit der Laserstrahl zur zentralen optischen Achse hin geringfügig abgelenkt wird. Dies wird in der Figur durch den sich überlappenden Bereich 7 auf der darauffolgenden Linse 8 dargestellt. Die Doppelkeilplatte wirkt wie zwei gegeneinander angeordnete Prismen, die den Laserstrahl entlang der Lichtfortpflanzungsrichtung leicht ablenken. Die Strahlung wird in zwei Teile 2" geteilt, bleibt immer noch kollimiert, läuft aber in zwei verschiedenen Fortpflanzungsrichtungen weiter. Durch die konvergente Linse 8 werden die beiden geteilten Strahlungen wieder auf einer Fokusebene 9 fokusiert und bilden sich dort als zwei Lichtpunkte 10, 11 aus. Der Keilwinkel und die optischen Eigenschaften der konvergenten Linse bestimmen die Distanz zwischen den zwei Laserpunkten 10, 11. Durch die Drehung der Doppelkeilplatte 4 können die zwei Laserpunkte 10, 11 auch symmetrisch um die optische Achse gedreht werden.

Die Strahlgeometrie auf der Fokusebene wird in einem derartigen Fall nicht mehr quasi-gausförmig sein, sondern es bilden sich zwei Halbkreise aus, die jedoch immer noch als ein normaler Punkt betrachtet werden können. Auf einen Schweißprozess zum Verbinden von Kunststoffteilen oder Folien hat diese Strahlform keinen wesentlichen Einfluss.

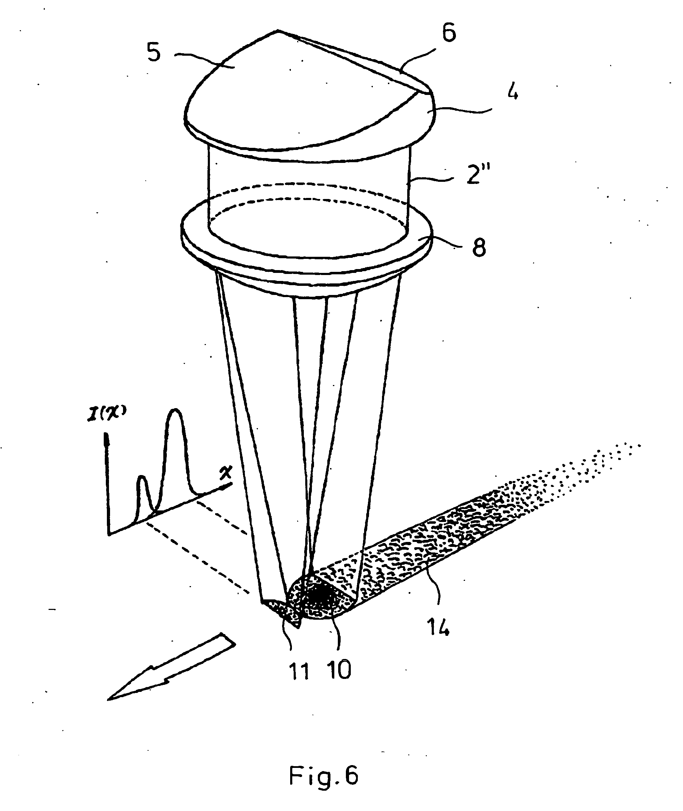

Die räumliche Teilung bestimmt auch die Lichtintensität (vergleiche Figur 6). Für eine Doppelschweißlinie, wie sie in Figur 4a dargestellt ist, ist die Ähnlichkeit der beiden Laserpunkte für den Schweißvorgang entscheidend. Das Dezentrieren der Doppelkeilplatte 4, wie in Figur 6 gezeigt, führt zu einer unsymmetrischen Intensitätsverteilung des Lichtes. Diese Eigenschaft kann für Konturschweißprozesse mit integriertem Vorerwärmungsvorgang, wie sie beispielsweise in den Figuren 4a, 5 und 6 dargestellt sind, verwendet werden. Die Distanz zwischen den beiden Laserpunkten das Verhältnis der Energiedosierung zwischen der Vorerwärmung und der Schweißung kann gemäß dem Schweißergebnis optimiert werden.

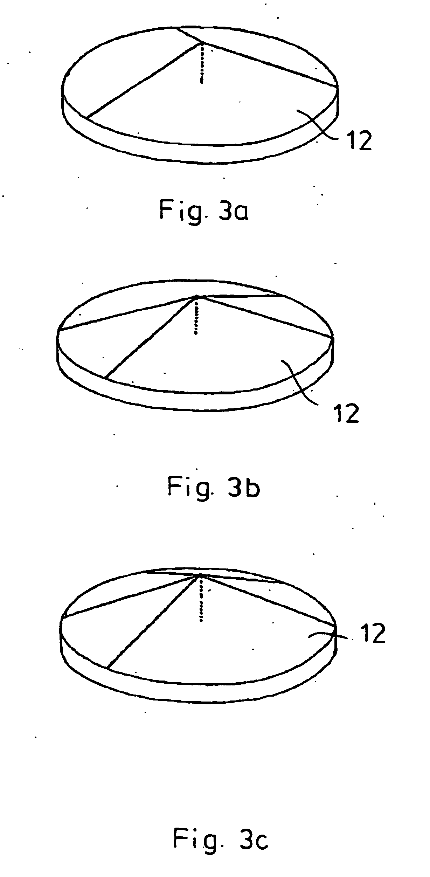

Durch die Rotation der Doppelkeilplatte kann ein aus zwei Laserpunkten gebildeter Ring erzeugt werden. Durch eine Vergrößerung der Anzahl der Keilen zu einer Mehrkeilplatte, wie in der Figur 3a mit drei Keilen 12, in der Figur 3b mit vier Keilen 12, in der Figur 3c mit fünf Keilen 12 oder auch mehr, kann die Anzahl der Strahlen entsprechend vergrößert werden.

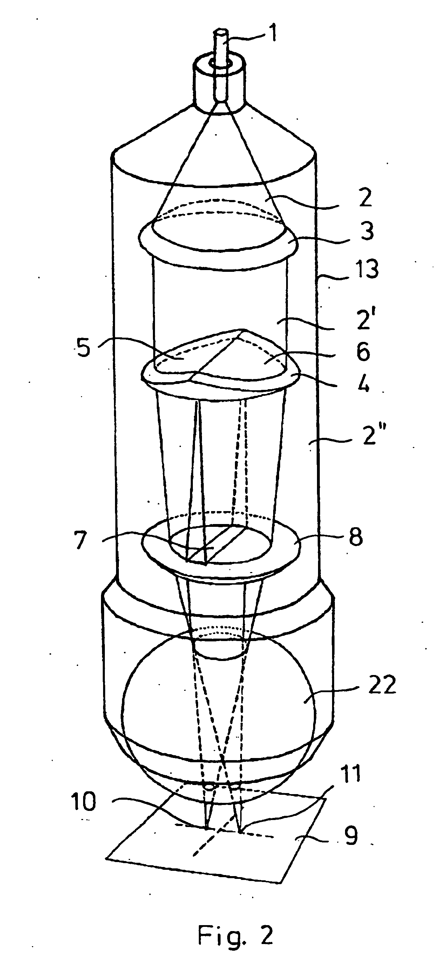

Sämtliche Anordnungen können in einem Bearbeitungskopf 13, wie in Figur 2 beispielhaft gezeigt, integriert sein. In dem Bearbeitungskopf 13 befindet sich außerdem am anderen Ende eine drehbar gelagerte Kugel 22 aus transparentem Material wie beispielsweise Glas oder Kunststoff, die den Laserstrahl auf die Fokusebene 9 lenkt. Über die Kugel 22 kann die für den Schweißvorgang erforderliche Anpresskraft im Augenblick des Verbindens per Hand oder auch maschinell aufgebracht werden.

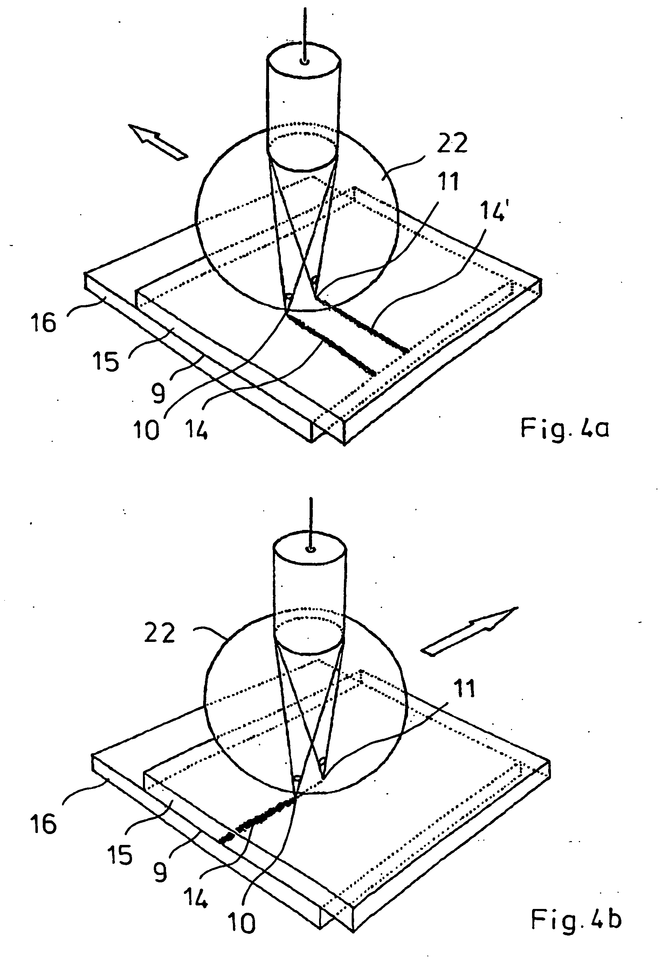

Figur 4 zeigt prinzipiell zwei mögliche Varianten für den Schweißvorgang. So zeigt Figur 4a zwei Laserpunkte 10, 11 die parallel zueinander in Pfeilrichtung bewegt werden, so dass sich zwei parallele Schweißnähte 14, 14' ausbilden. Dies ist insbesondere bei der Verschweißung von Folien mit einem Prüfkanal erforderlich. Figur 4b zeigt die Anordnung mit zwei Laserpunkten 10, 11, die sich hintereinander in Schweißrichtung bewegen und nur eine Schweißnaht 14 erzeugen. In beiden Figuren sind die in den Figuren 1 und 2 dargestellten optischen Anordnungen der Einfachheit halber nur prinzipiell angedeutet.

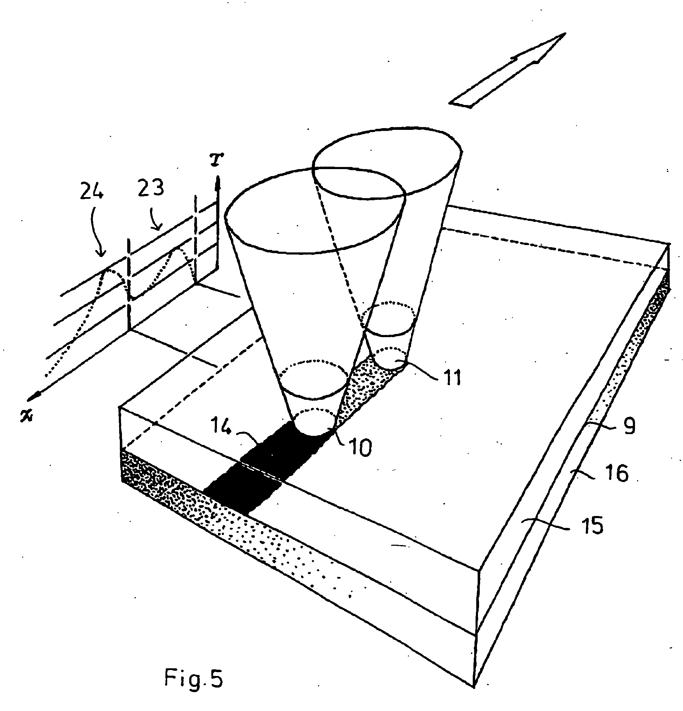

Figur 5 zeigt ein erstes für den Laserstrahl transparentes Werkstück 15 und ein darunter befindliches den Laserstrahl absorbierendes Werkstück 16, die mittels zwei sich in Schweißrichtung hintereinander bewegenden Laserpunkten 10, 11 miteinander verschweißt werden. Die Lichtpunkte 10, 11 sind auf die Berührungsfläche zwischen den beiden Werkstücken 15, 16 fokusiert, die damit die Fokusebene 9 bildet. Das ebenfalls aufgezeigte Diagramm zeigt die Temperatur im Bereich der Fokusebene 9. Es ist ersichtlich, dass der gesamte Prozess sich aus einem Vorerwärmungsabschnitt 23 und aus einem Schweißabschnitt 24 entlang des Weges zusammensetzt.

In der Figur 6 ist, wie bereits schon erwähnt, eine Doppelkeilplatte 4 mit einem größeren Keil 5 und einem kleineren Keil 6 dargestellt, so dass sich entsprechend ein kleinerer Lichtpunkt 11 und daran anschließend ein größerer Lichtpunkt 10 auf der Fokusebene 9 ausbildet. Auch hierdurch kann eine Vorerwärmung mit anschließender Schweißung bei einer Bewegung in Schweißrichtung realisiert werden. Die Lichtintensität als Funktion des Weges ist in dieser Figur ebenfalls prinzipiell angedeutet.

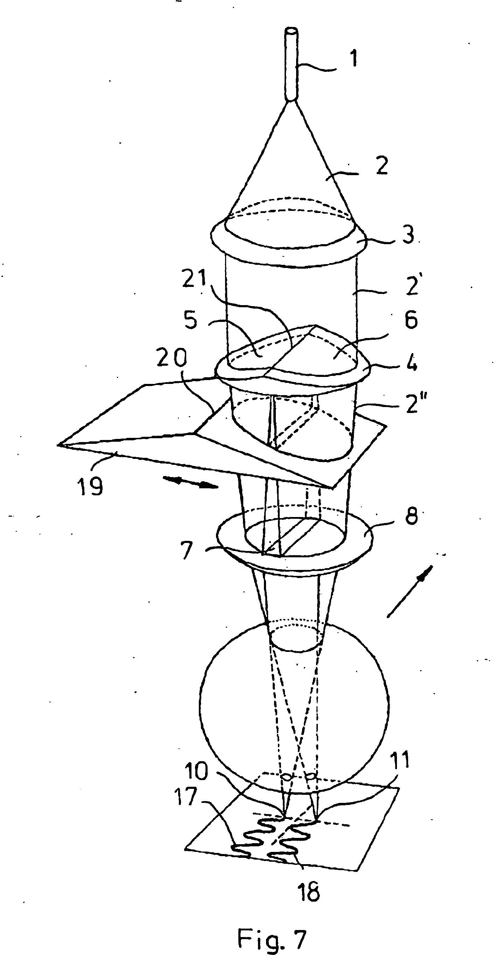

Figur 7 zeigt eine Anordnung zur Erzeugung von zwei parallelen zick-zack-förmigen Schweißkonturen 17, 18 die durch die beiden Laserpunkte 10, 11, die sich in Schweißrichtung bewegen, erzeugt werden. Hierzu wird nach der Doppelkeilplatte 4 ein weiterer Doppelkeil 19 quer zur optischen Achse in dem Strahlengang des Laserstrahls 2 hin- und herbewegt. Dabei ist der Doppelkeil 19 so anzuordnen, dass die Trennungslinie 20 parallel zu der Trennungslinie 21 zwischen den Keilen 5 und 6 der Doppelkeilplatte 4 verlaufen.

In dem Ausführungsbeispiel sind die beiden Doppelkeile mit ihrer dicken Seite einander zugewandt. Genauso gut können sie auch mit ihren schmalen Seiten einander zugekehrt sein. Die Hin- und Herbewegung des Doppelkeils 19 kann mittels eines Motors und einer entsprechenden Mechanik auf einfache und bekannte Art und Weise realisiert werden.

## Patentansprüche

1. Verfahren zum Erwärmen von Kunststoff mit mehreren Laserpunkten aus einem Laserstrahl (2) auf einer Fokusebene (9) vorzugsweise zum Verschweißen von Kunststoffen nach dem Laserdurchstrahlverfahren,wobei
der Laserstrahl (2) mittels einer ersten Linse (3) kollimiert wird,
dann der Laserstrahl (2') mittels einer Mehrfachkeilplatte (4) mit der Anzahl der zu erzeugenden Laserpunkten (10, 11) entsprechenden Anzahl an Keilen (5, 6; 12), die um einen vorgegebenen Winkel versetzt sind, geteilt wird und die Laserstrahlteile (2") weiterhin kollimiert mit verschiedenen Fortpflanzungsrichtungen einer konvergierenden Linse (8) zugeführt werden,
dann durch die konvergierende Linse (8) die Laserpunkte (10, 11) auf einer Fokusebene (9) erzeugt werden und
die getrennten Laserstrahlen nach der konvergierenden Linse (8) in eine für den Laserstrahl transparente Kugel (22) eingekoppelt und bei Bewegung der Kugel (22) entsprechend über die Fokusebene (9) geführt werden.

2. Verfahren nach Anspruch 1, **dadurch gekennzeichnet, dass** über die Größe der einzelnen Keile (5, 6; 12) die Lichtintensität der Laserpunkte eingestellt wird.

3. Verfahren nach Anspruch 1, **dadurch gekennzeichnet, dass** über zwei quer zum Laserstrahl (2) bewegbare Ablenkelemente (19) Laserpunkte (10, 11) erzeugt werden, die nebeneinander zick-zack-förmig über die Fokusebene (9) bewegt werden.

4. Verfahren nach Anspruch 3, **dadurch gekennzeichnet, dass** zur Erzeugung der zick-zack-förmigen Konturen (17, 18) auf der Fokusebene (9) zwei den Laserstrahl (2') jeweils um einen vorgegebenen Winkel entgegengesetzt ablenkende Keile (19) abwechselnd in den Laserstrahlengang gebracht werden.

5. Vorrichtung zum Erwärmen von Kunststoff mittels Laserstrahlen, **dadurch gekennzeichnet, dass** in dem Strahlengang des Laserstrahls (2) in einem Bearbeitungskopf (13) eine erste Linse (3) zum Kollimieren des Laserstrahls (2), daran anschließend eine Mehrfachkeilplatte (4) mit der Anzahl der zur erzeugenden Laserpunkten (10, 11) entsprechenden Anzahl von Keilen (5, 6; 12), darauf folgend eine konvergente Linse (8) zum Fokusieren der einzelnen Laserpunkte auf einer Fokusebene (9) und schließlich eine für den Laserstrahl (2) transparente Kugel (22), die den Laserstrahl auf die Fokusebene (9) lenkt, angeordnet ist.

6. Vorrichtung nach Anspruch 6, **dadurch gekennzeichnet, dass** die für den Laserstrahl transparente Kugel (22) drehbar im Bearbeitungskopf (13) gelagert ist, der den Laserstrahl (2) über die Fokusebene (9) führt und die Kunststoffe aufeinander presst.

7. Vorrichtung nach Anspruch 5 oder 6, **dadurch gekennzeichnet, dass** die Mehrkeilplatte (4) als Doppelkeilplatte ausgebildet ist und zwischen dieser und der konvergenten Linse (8) zwei Ablenkkeile (19) vorgesehen sind, die mit ihren Berührungskanten (20) parallel zu den Berührungskanten (21) zwischen der Doppelkeilplatte (4) verlaufen und quer zum Laserstrahl (2) hin- und her bewegbar sind.

## Claims

1. Method of heating plastics material with a plurality of laser points from a laser beam (2) on a focal plane (9), preferably for welding plastics materials in accordance with the laser transmission method, wherein
the laser beam (2) is collimated by means of a first lens (3),
then the laser beam (2') is split by means of a multiple wedge plate (4), with the number of wedges (5, 6; 12), which are offset by a prescribed angle, corresponding to the number of laser points (10, 11) to be produced, and the laser beam portions (2"), further collimated, are supplied with different propagation directions to a converging lens (8)
then the laser points (10, 11) are produced by the converging lens (8) on a focal plane (9), and
the separated laser beams, after the converging lens (8), are introduced into a ball (22), transparent for the laser beam, and are appropriately guided, by movement of the ball (22), over the focal plane (9).

2. Method according to claim 1, **characterised in that** the light intensity of the laser points is set via the size of the individual wedges (5, 6; 12).

3. Method according to claim 1, **characterised in that** laser points (10, 11) are produced, which are moved in a zigzag manner adjacent each other over the focal plane (9), via two deflection elements (19), which are displaceable transversely relative to the laser beam (2).

4. Method according to claim 3, **characterised in that**, to produce the zigzag-shaped outlines (17, 18) on the focus plane (9), two wedges (19) which each deflect the laser beam (2') in opposite directions by a prescribed angle, are brought alternately into the laser beam path.

5. Apparatus for heating plastics material by means of laser beams, **characterised in that** there are disposed, in the beam path of the laser beam (2) in a processing head (13), a first lens (3) for collimating the laser beam (2), then a multiple wedge (4) with the number of wedges (5, 6; 12) corresponding to the number of laser points (10, 11) to be produced, then a convergent lens (8) for focusing the individual laser points on a focal plane (9), and finally a ball (22) which is transparent for the laser beam (2) and deflects the laser beam onto the focal plane (9).

6. Apparatus according to claim 6, **characterised in that** the ball (22), transparent for the laser beam, is rotatably mounted in the processing head (13), which guides the laser beam (2) over the focal plane (9) and presses the plastics materials onto one another.

7. Apparatus according to claim 5 or 6, **characterised in that** the multiple wedge plate (4) is in the form of a double wedge plate, and, between said plate and the convergent lens (8), two deflection wedges (19) are provided which extend, with their contact edges (20), parallel to the contact edges (21) between the double wedge plate (4) and are reciprocatable transversely relative to the laser beam (2).

## Revendications

1. Procédé pour chauffer des matières plastiques avec plusieurs points laser d'un rayon laser (2) sur un plan focal (9), de préférence pour souder des matières plastiques selon le procédé du soudage laser par transparence ou irradiation traversante, dans lequel
le rayon laser (2) est collimaté au moyen d'une première lentille (3),
le rayon laser (2') est ensuite partagé au moyen d'une plaque à coins multiple (4) comportant le nombre de coins (5, 6 ; 12) correspondant au nombre de points laser (10, 11) à générer qui sont décalés d'un angle défini et les parties de rayon laser (2") toujours collimatées sont amenées selon différentes directions de propagation à une lentille convergente (8),
les points laser (10, 11) sont ensuite générés sur un plan focal (9) par la lentille convergente (8) et
les rayons laser séparés sont couplés après la lentille convergente (8) dans une sphère (22) transparente au rayon laser et, en cas de mouvement de la sphère (22), guidés corrélativement sur le plan focal (9).

2. Procédé selon la revendication 1, **caractérisé par le fait que** l'intensité lumineuse des points laser est réglée par la taille des différents coins (5, 6 ; 12).

3. Procédé selon la revendication 1, **caractérisé par le fait que** l'on génère au moyen de deux éléments de déviation (19) mobiles transversalement au rayon laser (2) des points laser (10, 11) qui sont déplacés côte à côté en zigzag sur le plan focal (9).

4. Procédé selon la revendication 3, **caractérisé par le fait que** pour générer les contours en zigzag (17, 18) sur le plan focal (9) on amène alternativement dans le trajet du rayon laser deux coins (19) déviant chaque fois le rayons laser (2') en sens inverse d'un angle défini.

5. Dispositif pour chauffer des matières plastiques au moyen de rayons laser, **caractérisé par le fait que** l'on dispose dans le trajet optique du rayon laser (2) dans une tête d'usinage (13) une première lentille (3) pour collimater le rayon laser (2), ensuite une plaque à coins multiple (4) comportant le nombre de coins (5, 6 ; 12) correspondant au nombre de points laser (10, 11) à générer, à la suite de celle-ci une lentille convergente (8) pour focaliser les différents points laser sur un plan focal (9) et enfin une sphère (22) transparente au rayon laser (2) qui dirige le rayon laser sur le plan focal (9).

6. Dispositif selon la revendication 6, **caractérisé par le fait que** la sphère (22) transparente au rayon laser est monté tournante dans la tête d'usinage (13) qui guide le rayon laser (2) sur le plan focal (9) et presse les matières plastiques l'une sur l'autre.

7. Dispositif selon la revendication 5 ou 6, **caractérisé par le fait que** la plaque à coins multiple (4) est réalisée sous forme de plaque à coins double et qu'il est prévu entre celle-ci et la lentille convergente (8) deux coins de déviation (19) qui s'étendent par leurs arêtes de contact (20) parallèlement aux arêtes de contact (21) entre la plaque à coins double (4) et peuvent effectuer un mouvement alternatif transversalement au rayon laser (2).
